# EUROPEAN PATENT SPECIFICATION

(11) **EP 3 341 177 B1**
(45) Date of publication and mention of the grant of the patent: **21.04.2021**
(21) Application number: 16766117.2
(22) Date of filing: 24.08.2016
(51) Int. Cl.: B29C 45/77

(54) **INJECTION MOLDING APPARATUS AND METHOD OF CONTROLLING SAME**
SPRITZGIESSVORRICHTUNG UND VERFAHREN ZUR STEUERUNG DAVON
APPAREIL DE MOULAGE PAR INJECTION ET PROCÉDÉ PERMETTANT DE LE COMMANDER

(30) Priority: 27.08.2015 US 201562210514 P
(43) Date of publication of application: 04.07.2018
(73) Proprietor: iMFLUX Inc., Hamilton, OH 45015 (US)
(72) Inventor: ALTONEN, Gene, Michael, Hamilton, OH 45015 (US); BURNS, Brian, Matthew, Hamilton, OH 45015 (US)
(74) Representative: Hoyng Rokh Monegier B.V.
(86) International application number: PCT/US2016/048376
(87) International publication number: WO 2017/035222

(56) References cited:
- EP-A1- 2 272 650
- EP-A1- 2 272 650
- WO-A1-03/057448
- WO-A1-03/057448
- US-A- 5 258 918
- US-A- 5 916 501
- US-A1- 2009 087 510
- US-A1- 2009 087 510
- US-A1- 2011 298 146
- US-A1- 2011 298 146

## Description

The systems and methods described below generally relate to the field of injection molding systems.

### BACKGROUND OF THE INVENTION

Injection molding is commonly used for manufacturing of parts made of meltable material, such as thermoplastic polymers. To facilitate the injection molding of these parts, a solid plastic resin is introduced to a heated barrel that houses a reciprocating screw. The heat and reciprocating screw cooperate to facilitate melting of the plastic and injecting the melted plastic into a mold cavity for forming into a desired shape. Conventionally, a controller is provided with a variety of setpoints that each define a desired melt pressure for a unique time during a molding cycle. For each setpoint, the controller commands the reciprocating screw to operate in such a manner that causes the melt pressure to converge towards the desired melt pressure at the time as defined by the setpoint. However, the controller maintains the desired melt pressure from the previous setpoint until the moment the desired melt pressure from the next setpoint is to be implemented. In other words, a pressure profile of the setpoints follows a stepwise defined function. As a result, the controller tries to cause the melt pressure to reach the setpoint immediately (e.g., over the duration of one sample) which can cause the internal melt pressure of the injection molding unit to overshoot the desired internal melt pressure and adversely affect the integrity of the molded part.

US 2011/0298146 A1 recites a high-gain observer which contains the discrete-time arithmetic expressions derived from a mathematical model of a plasticizing mechanism in an electric-motor driven injection molding machine consisting of state equations and outputs an estimate of screw back pressure, which is one of the state variables of the above state equations, by using a screw position signal, a servomotor current demand signal or actual motor current signal and a screw revolution speed signal as inputs.

WO 03/057448 A1 recites in an injection molding machine having upstream and downstream channels communicating with each other for delivering fluid material to one or more mold cavities, apparatus for controlling delivery of the melt material from the channels to the one or more mold cavities, each channel having an axis, the downstream channel having an axis intersecting a gate of a cavity of a mold, the upstream channel having an axis not intersecting the gate and being associated with an upstream actuator interconnected to an upstream melt flow controller disposed at a selected location within the upstream channel, the apparatus comprising a sensor for sensing a selected condition of the melt material at a position downstream of the upstream melt flow controller.

EP 2 272 650 A1 recites an in-line screw type injection molding machine which can have a simplified configuration of an injection mechanism and a metering mechanism.

US 2009/0087510 A1 recites a speed feedback control system for carrying out speed feedback control on the basis of a speed detected value obtained by converting a position detected value obtained from a screw position sensor, a pressure feedback control system for carrying out a pressure feedback control on the basis of a pressure detected value obtained from an injection pressure sensor, and a switching control function portion for carrying out switching from a speed control region to a pressure control region.

US 5,258,918 recites a controller for an injection molding machine controlling the injection ram by means of profiles having segments with programmable setpoints and boundary points. US 5,916,501 recites that in a control process speed stages are predetermined for the displacement of a movable unit and a nominal speed curve is derived therefrom.

### SUMMARY OF THE INVENTION

While the invention is defined in the independent claims, further aspects of the invention are set forth in the dependent claims, the drawings and the following description.

In accordance with one embodiment, a method of controlling a melt pressure of an injection molding apparatus is provided. The method comprises receiving a melt pressure profile. The melt pressure profile comprises a plurality of setpoints that each defines a desired melt pressure for the injection molding apparatus. The melt pressure profile extends between the setpoints. Each setpoint is separated from the other setpoints by a time period that defines at least a portion of an injection molding process during which a thermoplastic is being injected into a mold cavity (e.g. during initial injection, during filling, during packing, during holding, and/or during any pressure reduction after filling, packing, or holding). The method further includes determining the melt pressure profile at one or more intervals located between the setpoints. Each of the one or more intervals and the setpoints are separated by time and wherein each of the one or more intervals defines a desired melt pressure for the injection molding apparatus. At each of the one or more intervals, controlling the injection molding apparatus based upon the desired melt pressure defined by the melt pressure profile at each of the one or more intervals. For at least two immediately adjacent setpoints, the desired melt pressure at each of the one or more intervals located between the setpoints is different from the desired melt pressure at each of the at least two immediately adjacent setpoints.

In accordance with another embodiment, a method of creating a melt pressure profile for an injection molding apparatus is provided. The method comprises assigning a plurality of setpoints that each defines a desired melt pressure for the injection molding apparatus. Each setpoint is separated from the other setpoints by a time period that defines at least a portion of an injection molding process during which a thermoplastic is being injected into a mold cavity. The method further comprises assigning one or more desired melt pressures between each of the setpoints and assigning one or more sampling intervals to the melt pressure profile. The sampling intervals are separated by time. For at least two immediately adjacent setpoints, the desired melt pressure at each of the one or more sampling intervals located between the setpoints is different from the desired melt pressure at the at least two immediately adjacent setpoints.

In accordance with another embodiment, an injection molding apparatus comprises a heated barrel, a reciprocating screw, a power unit, a clamping unit, a nozzle, and a control system. The reciprocating screw is disposed in the heated barrel and is configured to reciprocate with respect to the heated barrel. The power unit is operably coupled with the reciprocating screw and is configured to facilitate reciprocation of the reciprocating screw with respect to the heated barrel. The clamping unit is for a mold. The clamping unit is associated with the heated barrel. The nozzle is disposed at one end of the heated barrel and is configured to distribute contents of the heated barrel to the clamping unit. The control system is in communication with the power unit and is configured to facilitate operation of the reciprocating screw. The control system has a melt pressure profile stored thereon. The melt pressure profile comprises a plurality of setpoints that each defines a desired melt pressure for the injection molding apparatus. The melt pressure profile extends between the setpoints. Each setpoint is separated from the other setpoints by a time period that defines at least a portion of an injection molding process during which a thermoplastic is being injected into a mold cavity. The control system is configured to sample the melt pressure profile at one or more intervals located between the setpoints, and, at each of the one or more intervals, control the operation of the reciprocating screw based upon the desired melt pressure defined by the melt pressure profile at the one or more intervals. For at least two immediately adjacent setpoints, the desired melt pressure at each of the one or more intervals located between the setpoints is different from the desired melt pressure at the at least two immediately adjacent setpoints.

### BRIEF DESCRIPTION OF THE DRAWINGS

It is believed that certain embodiments will be better understood from the following description taken in conjunction with the accompanying drawings in which:
FIG. 1 is a schematic view depicting an injection molding apparatus in accordance with one embodiment;
FIG. 2 is a block diagram depicting a control system of the injection molding apparatus of FIG. 1;
FIG. 3 is a block diagram depicting a PID controller of the control system of FIG. 2;
FIG. 4 is a plot of an example melt pressure profile depicting a relationship between a desired melt pressure and time, according to one embodiment;
FIG. 5 is a plot of a conventional melt pressure profile depicting a relationship between a desired melt pressure and time; and
FIG. 6 is a plot of an example melt pressure profile depicting a relationship between a desired melt pressure and time, according to another embodiment.

### Detailed Description

Embodiments disclosed herein generally relate to systems, machines, products, and methods of producing products by injection molding and, more specifically, to systems, machines, products, and methods of producing products by low, substantially constant pressure injection molding.

The term "low pressure" as used herein with respect to melt pressure of a thermoplastic material, means melt pressures in a vicinity of a nozzle of an injection molding machine of approximately 6000 psi (1000 psi ≈ 6.89 MPa) and lower.

The term "substantially constant pressure" as used herein with respect to a melt pressure of a thermoplastic material, means that deviations from a baseline melt pressure do not produce meaningful changes in physical properties of the thermoplastic material. For example, "substantially constant pressure" includes, but is not limited to, pressure variations for which viscosity of the melted thermoplastic material does not meaningfully change. The term "substantially constant" in this respect includes deviations of approximately 30% from a baseline melt pressure. For example, the term "a substantially constant pressure of approximately 4600 psi" includes pressure fluctuations within the range of about 6000 psi (30% above 4600 psi) to about 3200 psi (30% below 4600 psi). A melt pressure is considered substantially constant as long as the melt pressure fluctuates no more than 30% from the recited pressure.

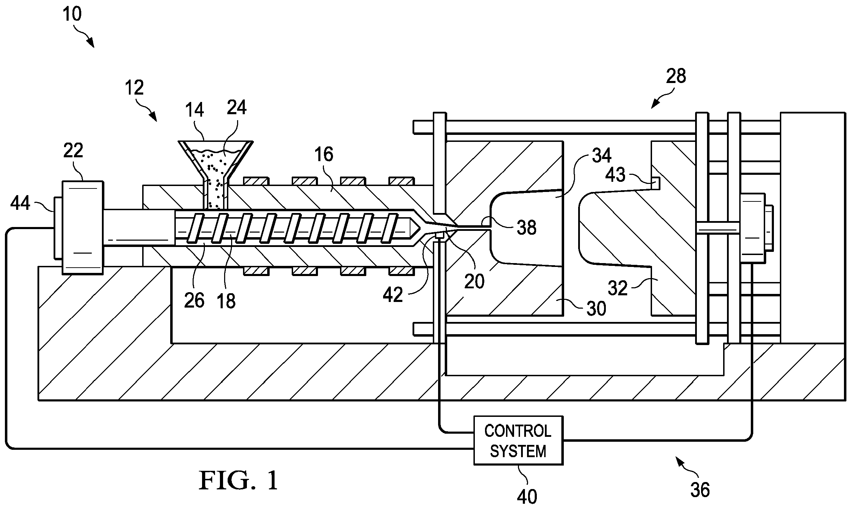

In connection with the views and examples of FIGS. 1-4 and 6, wherein like numbers indicate the same or corresponding elements throughout the views, FIG. 1 illustrates an injection molding apparatus 10 for producing molded plastic parts. The injection molding apparatus 10 can include an injection molding unit 12 that includes a hopper 14, a heated barrel 16, a reciprocating screw 18, and a nozzle 20. The reciprocating screw 18 can be disposed in the heated barrel 16 and configured to reciprocate with respect to the heated barrel 16. A power unit 22 can be operably coupled to the reciprocating screw 18 to facilitate powered reciprocation of the reciprocating screw 18. In some embodiments, the power unit 22 can comprise a hydraulic motor. In some embodiments, the power unit 22 can comprise an electric motor that is controlled with electric servos. Thermoplastic pellets 24 can be placed into the hopper 14 and fed into the heated barrel 16. Once inside the heated barrel 16, the thermoplastic pellets 24 can be heated (e.g., to between about 130 degrees C to about 410 degrees C) and melted to form a molten thermoplastic material 26. The reciprocating screw 18 can reciprocate within the heated barrel 16 to drive the molten thermoplastic material 26 into the nozzle 20. In an alternative embodiment, an injection molding unit can be a plunger-type system having a plunger (not shown) disposed in the heated barrel (e.g., 16) and configured to move linearly with respect to the heated barrel.

The nozzle 20 can be associated with a mold 28 having first and second mold portions 30, 32 that cooperate to form a mold cavity 34. A clamping unit 36 can support the mold 28 and can be configured to move the first and second mold portions 30, 32 between a clamped position (not shown) and an unclamped position (FIG. 1). When the first and second mold portions 30, 32 are in the clamped position, molten thermoplastic material 26 from the nozzle 20 can be provided to a gate 38 defined by the first mold portion 30 and into the mold cavity 34. As the mold cavity 34 is filled, the molten thermoplastic material 26 can take the form of the mold cavity 34. Once the mold cavity 34 has been sufficiently filled, the reciprocating screw 18 can stop, and the molten thermoplastic material 26 is permitted to cool within the mold 28. Once the molten thermoplastic material 26 has cooled and is solidified, or at least partially solidified, the first and second mold portions 30, 32 can be moved to their unclamped positions to allow the molded part to be removed from the mold 28. In one embodiment, the mold 28 can include a plurality of mold cavities (e.g., 34) to increase overall production rates.

The clamping unit 36 can apply a clamping force in the range of approximately 1000 P.S.I. to approximately 6000 P.S.I. during the molding process to hold the first and second mold portions 30, 32 together in the clamped position. To support these clamping forces, the mold, in some embodiments, can be formed from a material having a surface hardness from more than about 165 BHN to less than 260 BHN, although materials having surface hardness BHN values of greater than 260 may be used as long as the material is easily machineable, as discussed further below. In some embodiments, the mold 28 can be a class 101 or 102 injection mold (e.g., an "ultra-high productivity mold").

The injection molding apparatus 10 can include a control system 40 that is in signal communication with various components of the injection molding apparatus 10. The control system 40 can be in signal communication with a melt pressure sensor 42 located in, at or near, the nozzle 20, and with a cavity pressure sensor 43 located proximate an end of the mold cavity 34.

The melt pressure sensor 42 can facilitate detection (direct or indirect) of the actual melt pressure (e.g., the measured melt pressure) of the molten thermoplastic material 26, in, at, or near the nozzle 20. The melt pressure sensor 42 may or may not be in direct contact with the molten thermoplastic material 26. In one embodiment, the melt pressure sensor 42 can be a pressure transducer that transmits an electrical signal to an input of the control system 40 in response to the melt pressure at the nozzle 20. In other embodiments, the melt pressure sensor 42 can facilitate monitoring of any of a variety of additional or alternative characteristics of the molten thermoplastic material 26 at the nozzle 20 that might indicate melt pressure, such as temperature, viscosity, and/or flow rate, for example. If the melt pressure sensor 42 is not located within the nozzle 20, the control system 40 can be set, configured, and/or programmed with logic, commands, and/or executable program instructions to provide appropriate correction factors to estimate or calculate values for the measured characteristic in the nozzle 20. It is to be appreciated that sensors other than a melt pressure sensor can be employed to measure any other characteristics of the molten thermoplastic material 26, the screw 18, the barrel, or the like that is known in the art, such as, temperature, viscosity, flow rate, strain, velocity, etc. or one or more of any other characteristics that are indicative of any of these.

The cavity pressure sensor 43 can facilitate detection (direct or indirect) of the melt pressure of the molten thermoplastic material 26 in, at, or near the nozzle 20. The cavity pressure sensor 43 may or may not be in direct contact with the molten thermoplastic material 26. In one embodiment, the cavity pressure sensor 43 can be a pressure transducer that transmits an electrical signal to an input of the control system 40 in response to the cavity pressure within the mold cavity 34. In other embodiments, the cavity pressure sensor 43 can facilitate monitoring of any of a variety of additional or alternative characteristics of the thermoplastic material 26 or the mold 28 that might indicate cavity pressure, such as strain and/or flow rate of the molten thermoplastic material 26, for example. In one of these embodiments, the cavity pressure sensor 43 can be a strain gauge. If the cavity pressure sensor 43 is not located within the mold cavity 34, the control system 40 can be set, configured, and/or programmed with logic, commands, and/or executable program instructions to provide appropriate correction factors to estimate or calculate values for the measured characteristic of the mold 28.

The control system 40 can also be in signal communication with a screw control 44. In one embodiment, when the power unit 22 is a hydraulic motor, the screw control 44 can comprise a hydraulic valve associated with the reciprocating screw 18. In one embodiment, when the power unit 22 is an electric motor, the screw control 44 can comprise an electric controller associated with the reciprocating screw 18. In the embodiment of FIG. 1, the control system 40 can generate a signal that is transmitted from an output of the control system 40 to the screw control 44. The control system 40 can control injection pressures in the injection molding apparatus 10, by controlling the screw control 44, which controls the rates of injection by the injection molding unit 12. The control system 40 can command the screw control 44 to advance the reciprocating screw 18 at a rate that maintains a desired melt pressure of the molten thermoplastic material 26 in the nozzle 20.

This signal from the control system 40 to the screw control 44 may generally be used to control the molding process, such that variations in material viscosity, mold temperatures, melt temperatures, and other variations influencing filling rate, are taken into account by the control system 40. Adjustments may be made by the control system 40 immediately during the molding cycle, or corrections can be made in subsequent cycles. Furthermore, several signals, from a number of cycles can be used as a basis for making adjustments to the molding process by the control system 40. The control system 40 may be connected to the melt pressure sensor 42, and/or the cavity pressure sensor 43, and/or the screw control 44 via any type of signal communication known in the art.

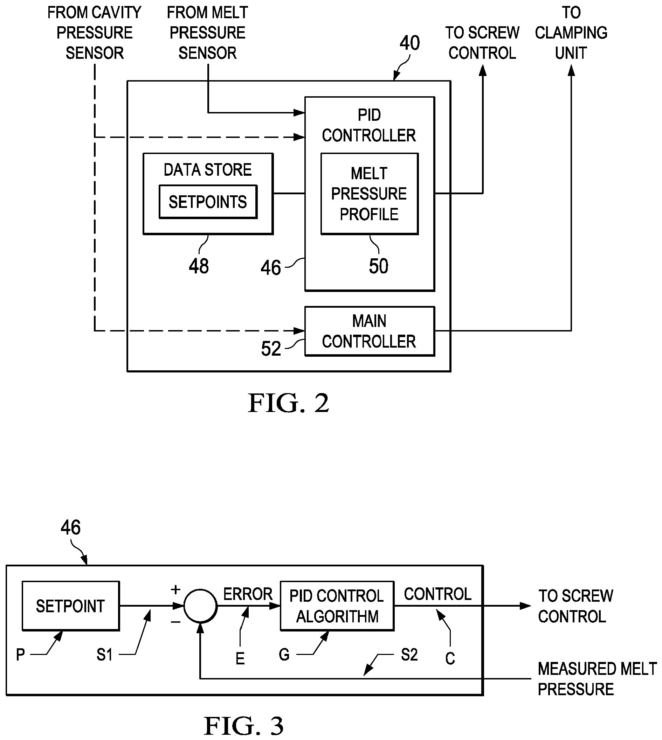

Referring now to FIG. 2, the control system 40 can include a PID controller 46 and a data store 48. The PID controller 46 can be a feedback controller that facilitates control of the melt pressure of the injection molding unit 12 (e.g., at the nozzle 20) to a setpoint that represents a desired melt pressure of the injection molding unit. As illustrated by the example feedback block diagram of the PID controller 46 in FIG. 3, the setpoint P can be provided as a signal S1 that is compared to the signal S2 from the melt pressure sensor 42 indicating the actual melt pressure. An error signal E is generated and is provided to a PID control algorithm G that generates a control signal C that commands the screw control 44 to advance the reciprocating screw 18 at a rate that causes the melt pressure to converge towards the desired melt pressure indicated by the setpoint P.

During a molding cycle, the melt pressure of the injection molding unit 12 can be changed by providing different setpoints to the PID controller 46. In one embodiment, each different setpoint provided to the PID controller 46 can correspond to a different stage of the molding cycle. For example, to initiate the initial injecting stage, a setpoint can be provided to the PID controller 46 that causes the melt pressure to increase enough to begin melting the thermoplastic pellets 24 and distributing the melt to the nozzle 20. Once the melt pressure has increased enough to begin filling the mold cavity 34, a setpoint can be provided to the PID controller 46 that initiates the filling stage at a pressure that is appropriate to properly fill the mold cavity 34. Once the mold cavity 34 is almost filled (e.g., end of fill), a setpoint can be provided to the PID controller 46 to decrease enough to initiate the packing stage and hold at a substantially constant melt pressure during the holding stage.

A plurality of setpoints can be provided to the PID controller 46 to facilitate effective control over the melt pressure of the injection molding unit 12 during each molding cycle. The particular setpoints provided to the PID controller 46 can be selected to enhance the performance of the molten thermoplastic material 26 throughout each molding cycle and can depend upon the particular molded part(s) that is/are being manufactured. The setpoints for the molded part(s) can be determined through empirical analysis and/or theoretical analysis. The setpoints can be provided from any of a variety of sources. In one embodiment, as illustrated in FIG. 2, a plurality of setpoints can be provided from a data store 48 on board the control system 40. In other embodiments, the plurality of setpoints can be provided from a remote source, such as the internet or a cloud-based storage device, for example.

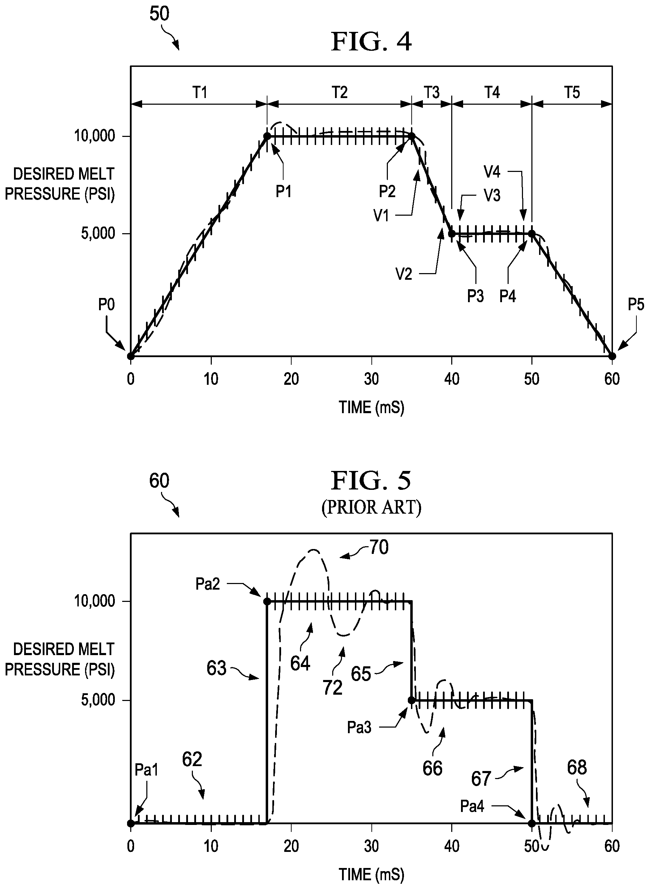

The PID controller 46 can establish a melt pressure profile 50 (FIG. 2) from the plurality of setpoints provided to the PID controller 46. In one embodiment, the PID controller 46 can establish the melt pressure profile 50 by substantially linearly interpolating the desired melt pressure values between each of the setpoints. One example of such a melt pressure profile is illustrated in FIG. 4. In this example, the melt pressure profile 50 is represented as a plot that depicts a variety of different setpoints P0-P5 over time. Each of the setpoints P0-P5 can be separated from the other setpoints P0-P5 by respective time periods T1-T5. The melt pressure profile 50 is shown to extend substantially linearly between the setpoints P0-P5.

Still referring to FIG. 4, the PID controller 46 can be configured to sample the pressure profile 50 at various intervals (illustrated as vertical hash marks) to facilitate control over the melt pressure of the injection molding unit 12. In particular, the PID controller 46 can control the melt pressure of the injection molding unit 12, at each interval, based upon the desired melt pressure defined by the melt pressure profile 50 at that interval. In one embodiment, the PID controller 46 can compare the melt pressure value at the interval to the current actual melt pressure of the injection molding unit 12 (e.g., from the melt pressure sensor 42). If there is a difference between the actual melt pressure and the desired melt pressure, the PID controller 46 can adjust the actual melt pressure of the injection molding unit 12 (e.g., by controlling the advancement rate of the reciprocating screw 18) such that the actual melt pressure converges towards the desired melt pressure. For example, if the actual melt pressure of the injection molding unit 12 at a given interval is greater than the desired melt pressure, the PID controller 46 can control operation of the reciprocating screw 18 to decrease the actual melt pressure. If the actual melt pressure of the injection molding unit 12 at a given interval is less than the desired melt pressure, the PID controller 46 can control operation of the reciprocating screw 18 to increase the actual melt pressure. The PID controller 46 can maintain the convergence of the melt pressure towards the desired melt pressure until the pressure profile 50 is sampled at the next interval. It is to be appreciated that, although the time periods T1-T5 are shown to be between about 5 mS and 20 mS, the setpoints can have time periods of any suitable duration. It is also to be appreciated that, although the melt pressure profile is shown to be sampled at about every 1 mS, any of a variety of different sampling rates can be employed.

The melt pressure profile 50 is shown to increase substantially linearly between setpoints P0 and P1 and to remain substantially horizontal between setpoints P1 and P2. The melt pressure profile 50 is shown to decrease substantially linearly between setpoints P2 and P3 and to remain substantially horizontal between setpoints P3 and P4. The melt pressure profile 50 is further shown to decrease substantially linearly between setpoints P4 and P5. For the portions of the melt pressure profile 50 that increase or decrease (e.g., P0 to P1, P2 to P3, or P4 to P5) (e.g., immediately adjacent setpoints), the desired melt pressure at each interval located at the setpoints and between the setpoints is different from the desired melt pressure at each of the immediately adjacent intervals that lie between the setpoints (see e.g., intervals V1 and V2). For example, for the setpoints P2 and P3, the desired melt pressure at each interval located at the setpoints P2 and P3 and between the setpoints P2 and P3 is different from the desired melt pressure at each of the immediately adjacent intervals that lie between the setpoints (e.g., the intervals between P2 and P3).

For the portions of the melt pressure profile 50 that remain substantially horizontal between the setpoints (e.g., P1 and P2, and P3 and P4) (e.g., immediately adjacent setpoints), the desired melt pressure at each interval is substantially the same as the desired melt pressure at the immediately adjacent interval between those setpoints (e.g., P1 and P2, and P3 and P4). For example, for the setpoints P1 and P2, the desired melt pressure at each interval located at the setpoints P2 and P3 and between the setpoints P1 and P2 is substantially the same as the desired melt pressure at the immediately adjacent interval between those setpoints (see e.g., intervals V3 and V4). For the setpoints P3 and P4, the desired melt pressure at each interval located at the setpoints P3 and P4 and between the setpoints P3 and P4 is substantially the same as the desired melt pressure at the immediately adjacent interval between those setpoints (interval V2 and interval V4 on FIG. 4, respectively). It is to be appreciated that, although the melt pressure profile 50 has been described as being sampled at each interval between all the setpoints, any combination of intervals can be sampled between each of the set points, such as, for example, only some of the setpoint or various sequential intervals between the setpoints. It is also to be appreciated that the intervals can be separated by substantially the same amount of time or different amounts of time.

By sampling the sloped portions of the melt pressure profile 50 (e.g., between P0 and P1, P2 and P3, and P4 and P5) between the setpoints, the PID controller 46 can gradually change the actual melt pressure of the injection molding unit 12 such that it closely tracks the melt pressure profile 50. An example plot of the actual melt pressure is illustrated as a dashed line on FIG. 4. The actual melt pressure of the injection molding unit 12 can thus be less susceptible to overshoot/undershoot than conventional injection molding units, which can encourage consistency, repeatability, and quality in the molded parts. It is to be appreciated that the melt pressure profile 50 can be implemented in the control system 40 as a data table that has a desired melt pressure assigned for each interval. During operation, the control system 40 can look up the desired pressure for the current interval and can generate an instruction that controls the actual melt pressure accordingly. It is also to be appreciated that any of a variety of suitable algorithms can be used to calculate the melt profile (e.g., in real time). In one example, the algorithm can be a curve-fitting algorithm, such as linear interpolation, polynomial curves, simple fitted curves, geometrically fitted curves, or any other curve-fitting approach known in the art. In other examples, any other suitable algorithm can be used to calculate the melt pressure profile.

A conventional controller can establish a melt pressure profile 60, as illustrated in FIG. 5, from a plurality of setpoints provided to the conventional controller. The melt pressure profile 60 is represented as a step-wise defined plot that depicts a variety of different setpoints Pa1-Pa4 over time. Each of the setpoints Pa1-Pa4 can be separated from the other setpoints by time. The melt pressure profile 60 is shown to be comprised of first, second, third, and fourth horizontal portions 62, 64, 66, 68 and first, second and third vertical portions 63, 65, 67. The first vertical portion 63 can extend between the first and second horizontal portions 62, 64. The second vertical portion 65 can extend between the second and third horizontal portions 64, 66. The third vertical portion 67 can extend between the and third and fourth horizontal portions 66, 68. Each of the first, second and third vertical portions 63, 65, 67 indicate a location in time where the desired melt pressure drastically changes (e.g., almost immediately over the duration of one interval). This drastic change can cause the conventional controller to attempt to reach the desired melt pressure as quickly as possible thus causing overshoot and/or undershoot in the actual melt pressure relative to the desired melt pressure. An example plot of the actual melt pressure is illustrated as a dashed line on FIG. 5. The overshoot and undershoot is illustrated at 70 and 72, respectively.

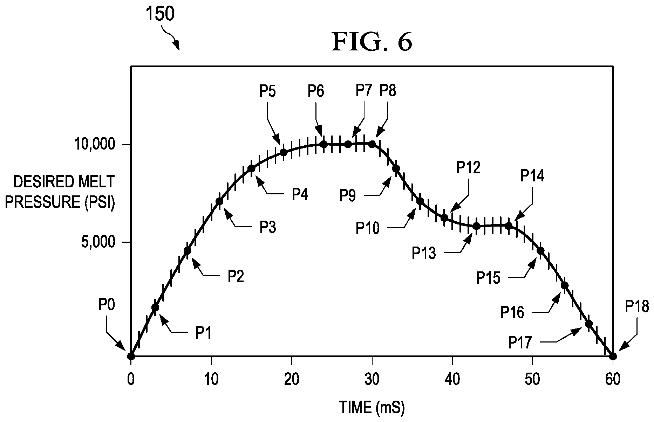

An alternative embodiment of a melt pressure profile 150 is illustrated in FIG. 6. The melt pressure profile 160 can be similar to the melt pressure profile 50 illustrated in FIG. 4. However, the melt pressure profile can have more setpoints P0-P18. The interpolation between each of those setpoints can be curvilinear rather than linear such that the melt pressure profile is substantially curvilinear. It is to be appreciated that any of a variety of different melt pressure profiles can be used to achieve certain performance for the injection molding unit 12.

It is also to be appreciated that the PID controller 46 can be implemented in hardware, software or any combination of both. It is also to be appreciated that the control system 40 can be any control arrangement having one or more controllers for accomplishing actual melt pressure control. In addition, the control system 40 can include other controllers, such as a main controller 52, which can perform other functions for the injection molding apparatus.

The foregoing description of embodiments and examples has been presented for purposes of illustration and description. It is not intended to be exhaustive or limiting to the forms described. Numerous modifications are possible in light of the above teachings. Some of those modifications have been discussed and others will be understood by those skilled in the art. The embodiments were chosen and described for illustration of various embodiments. The scope is, of course, not limited to the examples or embodiments set forth herein, but can be employed in any number of applications and equivalent devices by those of ordinary skill in the art. Rather it is hereby intended the scope be defined by the claims appended hereto. Also, for any methods claimed and/or described, regardless of whether the method is described in conjunction with a flow diagram, it should be understood that unless otherwise specified or required by context, any explicit or implicit ordering of steps performed in the execution of a method does not imply that those steps must be performed in the order presented and may be performed in a different order or in parallel.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A method of controlling a melt pressure of an injection molding apparatus, the method comprising:
receiving a melt pressure profile (50), the melt pressure profile (50) comprising a plurality of setpoints (P0, P1, P2, P3, P4, P5) that each define a desired melt pressure for the injection molding apparatus, the melt pressure profile (50) extending between the setpoints (P0, P1, P2, P3, P4, P5), and each setpoint being separated from the other setpoints (P0, P1, P2, P3, P4, P5) by a time period (T1, T2, T3, T4, T5) that defines at least a portion of an injection molding process during which a thermoplastic is being injected into a mold cavity;
determining the melt pressure profile (50) at one or more intervals located between the setpoints (P0, P1, P2, P3, P4, P5), wherein each of the one or more intervals and the setpoints (P0, P1, P2, P3, P4, P5) are separated by time and wherein each of the one or more intervals define a desired melt pressure for the injection molding apparatus; and
at each of the one or more intervals, controlling the injection molding apparatus based upon the desired melt pressure defined by the melt pressure profile (50) at each of the one or more intervals;
wherein, for at least two immediately adjacent setpoints (P0, P1, P2, P3, P4, P5), the desired melt pressure at each of the one or more intervals located between the setpoints (P0, P1, P2, P3, P4, P5) is different from the desired melt pressure at each of the at least two immediately adjacent setpoints (P0, P1, P2, P3, P4, P5);
wherein the melt pressure profile (50) is determined using a curve-fitting algorithm; the method **characterized in that** for at least two immediately adjacent setpoints (P0, P1, P2, P3, P4, P5), a plurality of intervals are located between the setpoints and the desired melt pressure at each interval between the setpoints (P0, P1, P2, P3, P4, P5) is different from the desired melt pressure at each immediately adjacent interval that lies between the setpoints (P0, P1, P2, P3, P4, P5).

2. The method of claim 1, wherein for at least two other immediately adjacent setpoints (P0, P1, P2, P3, P4, P5), the desired melt pressure at each of the one or more intervals is substantially the same as the desired melt pressure at the at least two other immediately adjacent setpoints (P0, P1, P2, P3, P4, P5).

3. The method of claim 1, wherein for the at least two immediately adjacent setpoints (P0, P1, P2, P3, P4, P5) where the desired melt pressure at each of the one or more intervals is different from the desired melt pressure at each of the at least two immediately adjacent setpoints (P0, P1, P2, P3, P4, P5), the melt pressure profile (50) is substantially linear.

4. The method of claim 2, wherein for the at least two other immediately adjacent setpoints (P0, P1, P2, P3, P4, P5) where the desired melt pressure at each of the one or more intervals is substantially the same as the desired melt pressure at the at least two other immediately adjacent setpoints (P0, P1, P2, P3, P4, P5), the melt pressure profile (50) is substantially linear.

5. The method of claim 1 wherein for the at least two immediately adjacent setpoints (P0, P1, P2, P3, P4, P5) where the desired melt pressure at each of the one or more intervals is different from the desired melt pressure at the at least two immediately adjacent setpoints (P0, P1, P2, P3, P4, P5), the time period (T1, T2, T3, T4, T5) is about 10 milliseconds.

6. The method of claim 5 wherein the sampling of each interval along the time period (T1, T2, T3, T4, T5) occurs about every millisecond.

7. The method of claim 1 wherein controlling the injection molding apparatus based upon the desired melt pressure further comprises:
receiving a measured melt pressure value from a pressure sensor, the pressure sensor being associated with a heated barrel of the injection molding apparatus and configured to measure the melt pressure of the heated barrel;
comparing the measured melt pressure of the heated barrel to the desired melt pressure at each of the one or more intervals; and
if there is a difference between the measured melt pressure and the desired melt pressure at each of the one or more intervals, adjusting the measured melt pressure of the heated barrel such that the measured melt pressure converges towards the desired melt pressure.

8. The method of claim 7 wherein adjusting the measured melt pressure of the heated barrel comprises controlling a reciprocating screw disposed inside the heated barrel preferably by controlling a hydraulic valve associated with the reciprocating screw.

9. The method of claim 7 wherein adjusting the measured melt pressure of the heated barrel comprises controlling a plunger disposed inside the heated barrel.

10. The method of claim 1 wherein determining the melt pressure profile (50) comprises sampling a data table that defines the desired melt pressure at each of the one or more intervals and/or comprises calculating the desired melt pressure at each of the one or more intervals using an algorithm.

11. The method of claim 1 for at least two immediately adjacent setpoints (P0, P1, P2, P3, P4, P5), a plurality of intervals are located between the setpoints (P0, P1, P2, P3, P4, P5) and the desired melt pressure at various sequential intervals between the setpoints (P0, P1, P2, P3, P4, P5) is different from the desired melt pressure at each immediately adjacent interval that lies between the setpoints (P0, P1, P2, P3, P4, P5).

12. The method of claim 1 for each of the setpoints (P0, P1, P2, P3, P4, P5) of the melt pressure profile (50), a plurality of intervals are located between the setpoints (P0, P1, P2, P3, P4, P5) and the desired melt pressure at each interval between the setpoints is different from the desired melt pressure at each immediately adjacent interval that lies between the setpoints (P0, P1, P2, P3, P4, P5).

13. An injection molding apparatus comprising:
a heated barrel;
a reciprocating screw disposed in the heated barrel and configured to reciprocate with respect to the heated barrel;
a power unit operably coupled with the reciprocating screw and configured to facilitate reciprocation of the reciprocating screw with respect to the heated barrel;
a clamping unit for a mold, the clamping unit being associated with the heated barrel;
a nozzle disposed at one end of the heated barrel and configured to distribute contents of the heated barrel to the clamping unit;
a control system in communication with the power unit and configured to facilitate operation of the reciprocating screw, the control system having a melt pressure profile (50) stored thereon, the melt pressure profile (50) comprising a plurality of setpoints (P0, P1, P2, P3, P4, P5) that each define a desired melt pressure for the injection molding apparatus, the melt pressure profile (50) extending between the setpoints (P0, P1, P2, P3, P4, P5), and each setpoint being separated from the other setpoints (P0, P1, P2, P3, P4, P5) by a time period (T1, T2, T3, T4, T5) that defines at least a portion of an injection molding process during which a thermoplastic is being injected into a mold cavity, the control system being configured to:
sample the melt pressure profile (50) at one or more intervals located between the setpoints (P0, P1, P2, P3, P4, P5); and
at each of the one or more intervals, control the operation of the reciprocating screw based upon the desired melt pressure defined by the melt pressure profile (50) at the one or more intervals;
wherein, for at least two immediately adjacent setpoints (P0, P1, P2, P3, P4, P5), the desired melt pressure at each of the one or more intervals located between the setpoints (P0, P1, P2, P3, P4, P5) is different from the desired melt pressure at the at least two immediately adjacent setpoints (P0, P1, P2, P3, P4, P5) wherein the melt pressure profile (50) is determined using a curve-fitting algorithm; **characterized in that**
for at least two immediately adjacent setpoints (P0, P1, P2, P3, P4, P5), a plurality of intervals are located between the setpoints (P0, P1, P2, P3, P4, P5) and the desired melt pressure at each interval between the setpoints (P0, P1, P2, P3, P4, P5) is different from the desired melt pressure at each immediately adjacent interval that lies between the setpoints (P0, P1, P2, P3, P4, P5).

14. The injection molding apparatus of claim 13 wherein the control system includes a data store for storing the plurality of setpoints (P0, P1, P2, P3, P4, P5) of the melt pressure profile (50) thereon, and/or
a mold disposed in the clamping unit.

15. The injection molding apparatus of claim 13 wherein the power unit is at least one of a hydraulic system preferably comprising a hydraulic valve, and
an electric system preferably comprising electrical servos.

16. The injection molding apparatus of claim 13 wherein for the at least two immediately adjacent setpoints (P0, P1, P2, P3, P4, P5) where the desired melt pressure at each of the one or more intervals is different from the desired melt pressure at the at least two immediately adjacent setpoints (P0, P1, P2, P3, P4, P5), the melt pressure profile (50) is substantially linear.

17. The injection molding apparatus of claim 13 for at least two immediately adjacent setpoints (P0, P1, P2, P3, P4, P5), a plurality of intervals are located between the setpoints (P0, P1, P2, P3, P4, P5) and the desired melt pressure at various sequential intervals between the setpoints (P0, P1, P2, P3, P4, P5) is different from the desired melt pressure at each immediately adjacent interval that lies between the setpoints (P0, P1, P2, P3, P4, P5).

18. The injection molding apparatus of claim 13 for each of the setpoints (P0, P1, P2, P3, P4, P5) of the melt pressure profile (50), a plurality of intervals are located between the setpoints (P0, P1, P2, P3, P4, P5) and the desired melt pressure at each interval between the setpoints (P0, P1, P2, P3, P4, P5) is different from the desired melt pressure at each immediately adjacent interval that lies between the setpoints (P0, P1, P2, P3, P4, P5).

## Patentansprüche

1. Verfahren zum Steuern eines Schmelzdrucks einer Spritzgießeinrichtung, wobei das Verfahren Folgendes umfasst:
Empfangen eines Schmelzdruckprofils (50), wobei das Schmelzdruckprofil (50) mehrere Sollwerte umfasst (P0, P1, P2, P3, P4, P5), die jeweils einen gewünschten Schmelzdruck für die Spritzgießeinrichtung definieren, wobei sich das Schmelzdruckprofil (50) zwischen den Sollwerten (P0, P1, P2, P3, P4, P5) erstreckt und jeder Sollwert von den anderen Sollwerten (P0, P1, P2, P3, P4, P5) durch eine Zeitspanne (T1, T2, T3, T4, T5) getrennt ist, die mindestens einen Teil eines Spritzgießprozesses definiert, während dessen ein Thermoplast in einen Formenhohlraum eingespritzt wird;
Bestimmen des Schmelzdruckprofils (50) in einem oder mehreren Intervallen zwischen den Sollwerten (P0, P1, P2, P3, P4, P5), wobei jedes des einen oder der mehreren Intervalle und die Sollwerte (P0, P1, P2, P3, P4, P5) zeitlich voneinander getrennt sind und wobei jedes des einen oder der mehreren Intervalle einen gewünschten Schmelzdruck für die Spritzgießeinrichtung definiert; und
in jedem des einen oder der mehreren Intervalle, Steuern der Spritzgießeinrichtung basierend auf dem gewünschten Schmelzdruck, der durch das Schmelzdruckprofil (50) in jedem des einen oder der mehreren Intervalle definiert ist;
wobei bei mindestens zwei unmittelbar benachbarten Sollwerten (P0, P1, P2, P3, P4, P5) sich der gewünschte Schmelzdruck in jedem des einen oder der mehreren Intervalle zwischen den Sollwerten (P0, P1, P2, P3, P4, P5) vom gewünschten Schmelzdruck bei jedem der mindestens zwei unmittelbar benachbarten Sollwerte (P0, P1, P2, P3, P4, P5) unterscheidet;
wobei das Schmelzdruckprofil (50) unter Verwendung eines Kurvenanpassungsalgorithmus bestimmt wird;
wobei das Verfahren **dadurch gekennzeichnet ist, dass** für mindestens zwei unmittelbar benachbarte Sollwerte (P0, P1, P2, P3, P4, P5) sich mehrere Intervalle zwischen den Sollwerten befinden und sich der gewünschte Schmelzdruck in jedem Intervall zwischen den Sollwerten (P0, P1, P2, P3, P4, P5) vom gewünschten Schmelzdruck in jedem unmittelbar benachbarten Intervall unterscheidet, das zwischen den Sollwerten liegt (P0, P1, P2, P3, P4, P5).

2. Verfahren nach Anspruch 1, wobei für mindestens zwei andere unmittelbar benachbarte Sollwerte (P0, P1, P2, P3, P4, P5) der gewünschte Schmelzdruck in jedem des einen oder der mehreren Intervalle im Wesentlichen gleich ist zu dem gewünschten Schmelzdruck bei den mindestens zwei anderen unmittelbar benachbarten Sollwerten (P0, P1, P2, P3, P4, P5).

3. Verfahren nach Anspruch 1, wobei für die mindestens zwei unmittelbar benachbarten Sollwerte (P0, P1, P2, P3, P4, P5), bei denen sich der gewünschte Schmelzdruck in jedem des einen oder der mehreren Intervalle von dem gewünschten Schmelzdruck in jedem der mindestens zwei unmittelbar benachbarten Sollwerte (P0, P1, P2, P3, P4, P5) unterscheidet, das Schmelzdruckprofil (50) im Wesentlichen linear ist.

4. Verfahren nach Anspruch 2, wobei für die mindestens zwei anderen unmittelbar benachbarten Sollwerte (P0, P1, P2, P3, P4, P5), bei denen der gewünschte Schmelzdruck in jedem des einen oder der mehreren Intervalle im Wesentlichen gleich ist zu dem gewünschten Schmelzdruck in den mindestens zwei anderen unmittelbar benachbarten Sollwerten (P0, P1, P2, P3, P4, P5), das Schmelzdruckprofil (50) im Wesentlichen linear ist.

5. Verfahren nach Anspruch 1, wobei für die mindestens zwei unmittelbar benachbarten Sollwerte (P0, P1, P2, P3, P4, P5), bei denen sich der gewünschte Schmelzdruck in jedem des einen oder der mehreren Intervalle von dem gewünschten Schmelzdruck bei den mindestens zwei unmittelbar benachbarten Sollwerten (P0, P1, P2, P3, P4, P5) unterscheidet, die Zeitspanne (T1, T2, T3, T4, T5) etwa 10 Millisekunden beträgt.

6. Verfahren nach Anspruch 5, wobei das Abtasten jedes Intervalls entlang der Zeitspanne (T1, T2, T3, T4, T5) ungefähr jede Millisekunde erfolgt.

7. Verfahren nach Anspruch 1, wobei das Steuern der Spritzgießeinrichtung basierend auf dem gewünschten Schmelzdruck ferner Folgendes umfasst:
Empfangen eines gemessenen Schmelzdruckwerts von einem Drucksensor, wobei der Drucksensor einem beheizten Zylinder der Spritzgießeinrichtung zugeordnet und konfiguriert ist, um den Schmelzdruck des beheizten Zylinders zu messen;
Vergleichen des gemessenen Schmelzdrucks des beheizten Zylinders mit dem gewünschten Schmelzdruck in jedem des einen oder der mehreren Intervalle; und,
wenn in jedem des einen oder der mehreren Intervalle ein Unterschied zwischen dem gemessenen Schmelzdruck und dem gewünschten Schmelzdruck besteht, Einstellen des gemessenen Schmelzdrucks des beheizten Zylinders, so dass der gemessene Schmelzdruck sich dem gewünschten Schmelzdruck annähert.

8. Verfahren nach Anspruch 7, wobei das Einstellen des gemessenen Schmelzdrucks des beheizten Zylinders das Steuern einer sich hin-und herbewegenden Schnecke umfasst, die in dem beheizten Zylinder angeordnet ist, vorzugsweise durch Steuern eines mit der sich hin-und herbewegenden Schnecke verbundenen Hydraulikventils.

9. Verfahren nach Anspruch 7, wobei das Einstellen des gemessenen Schmelzdrucks des beheizten Zylinders das Steuern eines Kolbens umfasst, der in dem beheizten Zylinder angeordnet ist.

10. Verfahren nach Anspruch 1, wobei das Bestimmen des Schmelzdruckprofils (50) das Abtasten einer Datentabelle umfasst, die den gewünschten Schmelzdruck in jedem des einen oder der mehreren Intervalle definiert, und/oder das Berechnen des gewünschten Schmelzdrucks in jedem des einen oder der mehreren Intervalle unter Verwendung eines Algorithmus umfasst.

11. Verfahren nach Anspruch 1 für mindestens zwei unmittelbar benachbarte Sollwerte (P0, P1, P2, P3, P4, P5), wobei sich mehrere Intervalle zwischen den Sollwerten (P0, P1, P2, P3, P4, P5) befinden und sich der gewünschte Schmelzdruck in verschiedenen aufeinanderfolgenden Intervallen zwischen den Sollwerten (P0, P1, P2, P3, P4, P5) von dem gewünschten Schmelzdruck in jedem unmittelbar benachbarten Intervall unterscheidet, das zwischen den Sollwerten liegt (P0, P1, P2, P3, P4, P5).

12. Verfahren nach Anspruch 1 für jeden der Sollwerte (P0, P1, P2, P3, P4, P5) des Schmelzdruckprofils (50), wobei sich mehrere Intervalle zwischen den Sollwerten (P0, P1, P2, P3, P4, P5) befinden und sich der gewünschte Schmelzdruck in jedem Intervall zwischen den Sollwerten von dem gewünschten Schmelzdruck in jedem unmittelbar benachbarten Intervall unterscheidet, das zwischen den Sollwerten liegt (P0, P1, P2, P3, P4, P5).

13. Spritzgießeinrichtung, umfassend:
einen beheizten Zylinder;
eine sich hin-und herbewegende Schnecke, die in dem beheizten Zylinder angeordnet und konfiguriert ist, um sich in Bezug auf den beheizten Zylinder hin- und herzubewegen;
ein Antriebsaggregat, das betriebsmäßig mit der sich hin-und herbewegenden Schnecke verbunden und konfiguriert ist, um das Hin- und Herbewegen der sich hin-und herbewegenden Schnecke in Bezug auf den beheizten Zylinder zu erleichtern;
eine Klemmvorrichtung für eine Form, wobei die Klemmvorrichtung mit dem beheizten Zylinder verbunden ist;
eine Düse, die an einem Ende des beheizten Zylinders angeordnet und konfiguriert ist, um den Inhalt des beheizten Zylinders auf der Klemmvorrichtung zu verteilen;
ein Steuersystem, das mit dem Antriebsaggregat in Verbindung steht und konfiguriert ist, um den Betrieb der sich hin-und herbewegenden Schnecke zu erleichtern, wobei das Steuersystem ein darauf gespeichertes Schmelzdruckprofil (50) aufweist, wobei das Schmelzdruckprofil (50) mehrere Sollwerte (P0, P1, P2, P3, P4, P5) umfasst, die jeweils einen gewünschten Schmelzdruck für die Spritzgießeinrichtung definieren, wobei sich das Schmelzdruckprofil (50) zwischen den Sollwerten (P0, P1, P2, P3, P4, P5) erstreckt und jeder Sollwert von den anderen Sollwerten (P0, P1, P2, P3, P4, P5) durch eine Zeitspanne (T1, T2, T3, T4, T5) getrennt ist, die mindestens einen Teil eines Spritzgießprozesses definiert, während dessen ein Thermoplast in einen Formenhohlraum eingespritzt wird, wobei das Steuersystem konfiguriert ist, um:
das Schmelzdruckprofil (50) in einem oder mehreren Intervallen zwischen den Sollwerten (P0, P1, P2, P3, P4, P5) abzutasten; und
in jedem des einen oder der mehreren Intervalle den Betrieb der sich hin-und herbewegenden Schnecke basierend auf dem gewünschten Schmelzdruck, der durch das Schmelzdruckprofil (50) in dem einen oder den mehreren Intervallen definiert ist, zu steuern;
wobei sich, bei mindestens zwei unmittelbar benachbarten Sollwerten (P0, P 1, P2, P3, P4, P5), der gewünschte Schmelzdruck in jedem des einen oder der mehreren Intervalle zwischen den Sollwerten (P0, P1, P2, P3, P4, P5) von dem gewünschten Schmelzdruck bei den mindestens zwei unmittelbar benachbarten Sollwerten (P0, P1, P2, P3, P4, P5) unterscheidet, wobei das Schmelzdruckprofil (50) unter Verwendung eines Kurvenanpassungsalgorithmus bestimmt wird;
**dadurch gekennzeichnet, dass** sich für mindestens zwei unmittelbar benachbarte Sollwerte (P0, P1, P2, P3, P4, P5) mehrere Intervalle zwischen den Sollwerten (P0, P1, P2, P3, P4, P5) befinden und sich der gewünschte Schmelzdruck in jedem Intervall zwischen den Sollwerten (P0, P1, P2, P3, P4, P5) von dem gewünschten Schmelzdruck in jedem unmittelbar benachbarten Intervall unterscheidet, das zwischen den Sollwerten liegt (P0, P1, P2, P3, P4, P5).

14. Spritzgießeinrichtung nach Anspruch 13, wobei das Steuersystem einen Datenspeicher zum Speichern der mehreren Sollwerte (P0, P1, P2, P3, P4, P5) des Schmelzdruckprofils (50) und/oder eine in der Klemmvorrichtung angeordnete Form umfasst.

15. Spritzgießeinrichtung nach Anspruch 13, wobei das Antriebsaggregat ein Hydrauliksystem, das vorzugsweise ein Hydraulikventil umfasst, und/oder ein elektrisches System ist, das vorzugsweise elektrische Stellantriebe umfasst.

16. Spritzgießeinrichtung nach Anspruch 13, wobei für die mindestens zwei unmittelbar benachbarten Sollwerte (P0, P1, P2, P3, P4, P5), bei denen sich der gewünschte Schmelzdruck in jedem des einen oder der mehreren Intervalle von dem gewünschten Schmelzdruck bei den mindestens zwei unmittelbar benachbarten Sollwerten (P0, P1, P2, P3, P4, P5) unterscheidet, das Schmelzdruckprofil (50) im Wesentlichen linear ist.

17. Spritzgießeinrichtung nach Anspruch 13 für mindestens zwei unmittelbar benachbarte Sollwerte (P0, P1, P2, P3, P4, P5), wobei sich mehrere Intervalle zwischen den Sollwerten (P0, P1, P2, P3, P4, P5) befinden und sich der gewünschte Schmelzdruck in verschiedenen aufeinanderfolgenden Intervallen zwischen den Sollwerten (P0, P1, P2, P3, P4, P5) von dem gewünschten Schmelzdruck in jedem unmittelbar benachbarten Intervall unterscheidet, das zwischen den Sollwerten (P0, P1, P2, P3, P4, P5) liegt.

18. Spritzgießeinrichtung nach Anspruch 13 für jeden der Sollwerte (P0, P1, P2, P3, P4, P5) des Schmelzdruckprofils (50), wobei sich mehrere Intervalle zwischen den Sollwerten (P0, P1, P2, P3, P4, P5) befinden und sich der gewünschte Schmelzdruck in jedem Intervall zwischen den Sollwerten (P0, P1, P2, P3, P4, P5) von dem gewünschten Schmelzdruck in jedem unmittelbar benachbarten Intervall unterscheidet, das zwischen den Sollwerten (P0, P1, P2, P3, P4, P5) liegt.

## Revendications

1. Procédé de commande d'une pression de fusion d'un appareil de moulage par injection, le procédé comprenant :
la réception d'un profil de pression de fusion (50), le profil de pression de fusion (50) comprenant une pluralité de points de consigne (P0, P1, P2, P3, P4, P5) qui définissent chacun une pression de fusion souhaitée pour l'appareil de moulage par injection, le profil de pression de fusion (50) s'étendant entre les points de consigne (P0, P1, P2, P3, P4, P5), et chaque point de consigne étant séparé des autres points de consigne (P0, P1, P2, P3, P4, P5) par une période (T1, T2, T3, T4, T5) qui définit au moins une partie d'un processus de moulage par injection pendant lequel un thermoplastique est injecté dans une cavité d'un moule ;
la détermination du profil de pression de fusion (50) à un ou plusieurs intervalles situés entre les points de consigne (P0, P1, P2, P3, P4, P5), chacun du ou des intervalles et des points de consigne (P0, P1, P2, P3, P4, P5) étant séparés par un temps et dans lequel chacun du ou des intervalles définit une pression de fusion souhaitée pour l'appareil de moulage par injection ; et
à chacun du ou des intervalles, la commande de l'appareil de moulage par injection sur la base de la pression de fusion souhaitée définie par le profil de pression de fusion (50) à chacun du ou des intervalles ;
dans lequel, pour au moins deux points de consigne immédiatement adjacents (P0, P1, P2, P3, P4, P5), la pression de fusion souhaitée à chacun du ou des intervalles situés entre les points de consigne (P0, P1, P2, P3, P4, P5) est différente de la pression de fusion souhaitée à chacun des au moins deux points de consigne immédiatement adjacents (P0, P 1, P2, P3, P4, P5) ;
dans lequel le profil de pression de fusion (50) est déterminé à l'aide d'un algorithme d'ajustement d'une courbe ;
le procédé **caractérisé en ce que** pour au moins deux points de consigne immédiatement adjacents (P0, P1, P2, P3, P4, P5), une pluralité d'intervalles sont situés entre les points de consigne et la pression de fusion souhaitée à chaque intervalle entre les points de consigne (P0, P1, P2, P3, P4, P5) est différente de la pression de fusion souhaitée à chaque intervalle immédiatement adjacent qui se trouve entre les points de consigne (P0, P1, P2, P3, P4, P5).

2. Procédé selon la revendication 1, dans lequel pour au moins deux autres points de consigne immédiatement adjacents (P0, P1, P2, P3, P4, P5), la pression de fusion souhaitée à chacun du ou des intervalles est sensiblement la même que la pression de fusion souhaitée aux au moins deux autres points de consigne immédiatement adjacents (P0, P1, P2, P3, P4, P5).

3. Procédé selon la revendication 1, dans lequel pour les au moins deux points de consigne immédiatement adjacents (P0, P1, P2, P3, P4, P5) où la pression de fusion souhaitée à chacun du ou des intervalles est différente de la pression de fusion souhaitée à chacun des au moins deux points de consigne immédiatement adjacents (P0, P1, P2, P3, P4, P5), le profil de pression de fusion (50) est sensiblement linéaire.

4. Procédé selon la revendication 2, dans lequel pour les au moins deux autres points de consigne immédiatement adjacents (P0, P1, P2, P3, P4, P5) où la pression de fusion souhaitée à chacun du ou des intervalles est sensiblement la même que la pression de fusion souhaitée aux au moins deux autres points de consigne immédiatement adjacents (P0, P 1, P2, P3, P4, P5), le profil de pression de fusion (50) est sensiblement linéaire.

5. Procédé selon la revendication 1, dans lequel pour les au moins deux points de consigne immédiatement adjacents (P0, P1, P2, P3, P4, P5) où la pression de fusion souhaitée à chacun du ou des intervalles est différente de la pression de fusion souhaitée aux au moins deux points de consigne immédiatement adjacents (P0, P1, P2, P3, P4, P5), la période (T1, T2, T3, T4, T5) est d'environ 10 millisecondes.

6. Procédé selon la revendication 5, dans lequel l'échantillonnage de chaque intervalle le long de la période (T1, T2, T3, T4, T5) se produit environ toutes les millisecondes.

7. Procédé selon la revendication 1, dans lequel la commande de l'appareil de moulage par injection sur la base de la pression de fusion souhaitée comprend en outre :
la réception d'une valeur de pression de fusion mesurée d'un capteur de pression, le capteur de pression étant associé à un baril chauffé de l'appareil de moulage par injection et configuré pour mesurer la pression de fusion du baril chauffé ;
la comparaison de la pression de fusion mesurée du baril chauffé à la pression de fusion souhaitée à chacun du ou des intervalles ; et
s'il existe une différence entre la pression de fusion mesurée et la pression de fusion souhaitée à chacun du ou des intervalles, l'ajustement de la pression de fusion mesurée du baril chauffé de telle sorte que la pression de fusion mesurée converge vers la pression de fusion souhaitée.

8. Procédé selon la revendication 7, dans lequel l'ajustement de la pression de fusion mesurée du baril chauffé comprend la commande d'une vis-piston disposée à l'intérieur du baril chauffé de préférence en commandant une soupape hydraulique associée à la vis-piston.

9. Procédé selon la revendication 7, dans lequel l'ajustement de la pression de fusion mesurée du baril chauffé comprend la commande d'un plongeur disposé à l'intérieur du baril chauffé.

10. Procédé selon la revendication 1, dans lequel la détermination du profil de pression de fusion (50) comprend l'échantillonnage d'une table de données qui définit la pression de fusion souhaitée à chacun du ou des intervalles et/ou comprend le calcul de la pression de fusion souhaitée à chacun du ou des intervalles à l'aide d'un algorithme.

11. Procédé selon la revendication 1, pour au moins deux points de consigne immédiatement adjacents (P0, P1, P2, P3, P4, P5), une pluralité d'intervalles étant situés entre les points de consigne (P0, P1, P2, P3, P4, P5) et la pression de fusion souhaitée à divers intervalles séquentiels entre les points de consigne (P0, P1, P2, P3, P4, P5) étant différente de la pression de fusion souhaitée à chaque intervalle immédiatement adjacent qui se trouve entre les points de consigne (P0, P1, P2, P3, P4, P5).

12. Procédé selon la revendication 1, pour chacun des points de consigne (P0, P1, P2, P3, P4, P5) du profil de pression de fusion (50), une pluralité d'intervalles étant situés entre les points de consigne (P0, P1, P2, P3, P4, P5) et la pression de fusion souhaitée à chaque intervalle entre les points de consigne étant différente de la pression de fusion souhaitée à chaque intervalle immédiatement adjacent qui se trouve entre les points de consigne (P0, P1, P2, P3, P4, P5).

13. Appareil de moulage par injection, comprenant :
un baril chauffé ;
une vis-piston disposée dans le baril chauffé et conçue pour effectuer un mouvement de va-et-vient par rapport au baril chauffé ;
un bloc d'alimentation couplé de manière fonctionnelle à la vis-piston et conçu pour faciliter le mouvement de va-et-vient de la vis-piston par rapport au baril chauffé ;
une unité de fermeture pour un moule, l'unité de fermeture étant associée au baril chauffé ;
une buse disposée à une extrémité du baril chauffé et conçue pour distribuer le contenu du baril chauffé à l'unité de fermeture ;
un système de commande en communication avec le bloc d'alimentation et configuré pour faciliter le fonctionnement de la vis-piston, le système de commande ayant un profil de pression de fusion (50) stocké sur celui-ci, le profil de pression de fusion (50) comprenant une pluralité de points de consigne (P0, P1, P2, P3, P4, P5) qui définissent chacun une pression de fusion souhaitée pour l'appareil de moulage par injection, le profil de pression de fusion (50) s'étendant entre les points de consigne (P0, P1, P2, P3, P4, P5), et chaque point de consigne étant séparé des autres points de consigne (P0, P1, P2, P3, P4, P5) par une période (T1, T2, T3, T4, T5) qui définit au moins une partie d'un processus de moulage par injection pendant lequel un thermoplastique est injecté dans une cavité d'un moule, le système de commande étant configuré pour :
échantillonner le profil de pression de fusion (50) à un ou plusieurs intervalles situés entre les points de consigne (P0, P1, P2, P3, P4, P5) ; et
à chacun du ou des intervalles, commander le fonctionnement de la vis-piston sur la base de la pression de fusion souhaitée définie par le profil de pression de fusion (50) à un ou plusieurs intervalles ;
dans lequel, pour au moins deux points de consigne immédiatement adjacents (P0, P1, P2, P3, P4, P5), la pression de fusion souhaitée à chacun du ou des intervalles situés entre les points de consigne (P0, P1, P2, P3, P4, P5) est différente de la pression de fusion souhaitée aux au moins deux points de consigne immédiatement adjacents (P0, P1, P2, P3, P4, P5) dans lequel le profil de pression de fusion (50) est déterminé à l'aide d'un algorithme d'ajustement d'une courbe ; **caractérisé en ce que**
pour au moins deux points de consigne immédiatement adjacents (P0, P1, P2, P3, P4, P5), une pluralité d'intervalles sont situés entre les points de consigne (P0, P1, P2, P3, P4, P5) et la pression de fusion souhaitée à chaque intervalle entre les points de consigne (P0, P1, P2, P3, P4, P5) est différente de la pression de fusion souhaitée à chaque intervalle immédiatement adjacent qui se trouve entre les points de consigne (P0, P1, P2, P3, P4, P5).

14. Appareil de moulage par injection selon la revendication 13, dans lequel le système de commande comporte une banque de données pour stocker la pluralité de points de consigne (P0, P1, P2, P3, P4, P5) du profil de pression de fusion (50) sur celui-ci, et/ou
un moule disposé dans l'unité de fermeture.

15. Appareil de moulage par injection selon la revendication 13, dans lequel le bloc d'alimentation est un système hydraulique comprenant de préférence une soupape hydraulique, et/ou
un système électrique comprenant de préférence des servomécanismes électriques.

16. Appareil de moulage par injection selon la revendication 13, dans lequel pour les au moins deux points de consigne immédiatement adjacents (P0, P1, P2, P3, P4, P5) où la pression de fusion souhaitée à chacun du ou des intervalles est différente de la pression de fusion souhaitée aux au moins deux points de consigne immédiatement adjacents (P0, P1, P2, P3, P4, P5), le profil de pression de fusion (50) est sensiblement linéaire.

17. Appareil de moulage par injection selon la revendication 13, pour au moins deux points de consigne immédiatement adjacents (P0, P1, P2, P3, P4, P5), une pluralité d'intervalles étant situés entre les points de consigne (P0, P1, P2, P3, P4, P5) et la pression de fusion souhaitée à divers intervalles séquentiels entre les points de consigne (P0, P1, P2, P3, P4, P5) étant différente de la pression de fusion souhaitée à chaque intervalle immédiatement adjacent qui se trouve entre les points de consigne (P0, P1, P2, P3, P4, P5).

18. Appareil de moulage par injection selon la revendication 13, pour chacun des points de consigne (P0, P1, P2, P3, P4, P5) du profil de pression de fusion (50), une pluralité d'intervalles étant situés entre les points de consigne (P0, P1, P2, P3, P4, P5) et la pression de fusion souhaitée à chaque intervalle entre les points de consigne (P0, P1, P2, P3, P4, P5) étant différente de la pression de fusion souhaitée à chaque intervalle immédiatement adjacent qui se trouve entre les points de consigne (P0, P1, P2, P3, P4, P5).
